(19) Europäisches Patentamt
European Patent Office
Office européen des brevets

(11) **EP 4 761 196 A1**

(12) **EUROPEAN PATENT APPLICATION**
published in accordance with Art. 153(4) EPC

(43) Date of publication:
**17.06.2026 Bulletin 2026/25**

(21) Application number: **24858370.0**

(22) Date of filing: **19.08.2024**

(51) International Patent Classification (IPC):
***H04L 27/26*** *(2006.01)*

(52) Cooperative Patent Classification (CPC):
**H04L 27/26**

(86) International application number:
**PCT/CN2024/113200**

(87) International publication number:
**WO 2025/044827 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.09.2023 CN 202311137309**

(71) Applicant: **HUAWEI TECHNOLOGIES CO., LTD.
Shenzhen 518129 (CN)**

(72) Inventors:
• **XIE, Xinqian
Shenzhen, Guangdong 518129 (CN)**
• **WANG, Zhonglong
Shenzhen, Guangdong 518129 (CN)**

(74) Representative: **Körber, Martin Hans
Mitscherlich PartmbB
Karlstraße 7
80333 München (DE)**

(54) **COMMUNICATION METHOD AND APPARATUS**

(57) This application belongs to the field of communication technologies, and provides a communication method and apparatus, to improve sensing performance while communication performance of a communication system is ensured. In the method, when elements in [*b*(*n*)] meet a first feature, a second feature, a third feature, or a fourth feature, an optimal compromise between communication and sensing performance can be implemented, so that the sensing performance can be improved while the communication performance of the communication system is ensured, that is, an optimal frequency shaping coefficient is adaptively selected to achieve joint optimal performance of communication and sensing. In addition, because elements in [*a*(*n*)] satisfy Formula (I), a user signal can be extended on an entire carrier bandwidth. Therefore, a first signal is determined based on [*a*(*n*)], so that each user signal can occupy the entire carrier bandwidth in a multi-user scenario, and sensing accuracy and resolution can be maintained.

FIG. 5

## Description

This application claims priority to Chinese Patent Application No. 202311137309.0, filed with the China National Intellectual Property Administration on September 1, 2023 and entitled "COMMUNICATION METHOD AND APPARATUS", which is incorporated herein by reference in its entirety.

## TECHNICAL FIELD

This application relates to the communication field, and in particular, to a communication method and apparatus.

## BACKGROUND

In a process of evolution from a 5th generation (5th generation, 5G) mobile communication system to a 5G-advanced technology, an integrated communication and sensing technology is considered to be one of key technologies that can extend a service capability of a mobile communication network. A core idea of this technology is to add a sensing capability to the mobile communication network, and construct a capability of detecting, tracking, and imaging a target, so that communication and sensing capabilities are integrated into one network, thereby achieving harmonious coexistence and even mutual benefit. Currently, an orthogonal frequency division multiplexing (orthogonal frequency division multiplexing, OFDM) waveform technology is used for a communication signal. In the OFDM waveform technology, orthogonal subcarriers can be constructed in frequency domain, and to-be-sent modulation symbols are mapped to different subcarriers in frequency domain, so that different modulation symbols can be simultaneously sent.

However, there is a large gap between performance of an OFDM waveform used for sensing and optimal sensing performance, and joint optimal performance of communication and sensing cannot be achieved. In addition, when a plurality of users use a frequency division multiplexing manner, sensing performance (such as accuracy and resolution) is reduced. Therefore, how to improve the sensing performance while communication performance of a communication system is ensured is a hot topic currently discussed.

## SUMMARY

Embodiments of this application provide a communication method and apparatus, to improve sensing performance of a communication signal while communication performance of a communication system is ensured.

To achieve the foregoing objective, this application uses the following technical solutions.

According to a first aspect, a communication method is provided. The method may be performed by a first apparatus, or may be performed by a part of the first apparatus, for example, a processor, a chip, or a chip system of the first apparatus, or may be implemented by a logical module or software that can implement all or some functions of the first apparatus. The following uses an example in which the method is performed by the first apparatus for description. The method includes: determining $[c(n)]$ based on $[a(n)]$ and $[b(n)]$; and generating a first signal based on $[c(n)]$, and sending the first signal. $[a(n)]$, $[b(n)]$, and $[c(n)]$ each include N elements, $n \in \{1, ..., N\}$, and N is a positive integer. The elements in $[a(n)]$ satisfy $a(n) = e^{-j\frac{2\pi}{N}(\alpha n^2 + \beta n + \gamma)}$, and $\alpha$, $\beta$, and $\gamma$ are predetermined coefficients. The elements in $[b(n)]$ meet a first feature, a second feature, a third feature, or a fourth feature. The first feature is that when n is less than $k$, $b(n)$ is less than $b(n + 1)$, or when $n$ is greater than $k$, $b(n)$ is less than $b(n - 1)$, the second feature is that when $n$ is less than $k$, $b(n)$ is greater than $b(n + 1)$, or when $n$ is greater than $k$, $b(n)$ is greater than $b(n - 1)$, the third feature is that when $n$ is less than $k1$, $b(n)$ is greater than $b(n + 1)$, when $n$ is greater than or equal to $k1$ and less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than N.

It can be learned from the method in the first aspect that, $[a(n)]$ is a constant modulus sequence, $[b(n)]$ is a spectrum shaping coefficient, and $[c(n)]$ is a frequency domain signal obtained by performing constant modulus sequence and spectrum shaping processing. When the elements in $[b(n)]$ meet the first feature, the second feature, the third feature, or the fourth feature, an optimal compromise between communication and sensing performance can be implemented, so that the sensing performance can be improved while communication performance of a communication system is ensured, that is, an optimal frequency shaping coefficient is adaptively selected to achieve joint optimal performance of communication and sensing. In addition, because the elements in $[a(n)]$ satisfy $a(n) = e^{-j\frac{2\pi}{N}(\alpha n^2 + \beta n + \gamma)}$, a user signal can be extended on an entire carrier bandwidth. Therefore, the first signal is determined based on $[a(n)]$, so that each user signal can occupy the entire carrier bandwidth in a multi-user scenario, and sensing accuracy and resolution can be maintained.

In a possible design solution, $[d(n)]$ is processed based on $[a(n)]$ and $[b(n)]$ to obtain $[c(n)]$, where $[d(n)]$ includes N elements, and an element in $[c(n)]$ is represented by the following: $c(n) = b(n) * a(n) * d(n)$.

Optionally, [$d(n)$] is obtained by performing Fourier transform on [$e(n)$], [$e(n)$] is determined based on [$f(x)$], [$f(x)$] carries information, [$f(x)$] includes $X$ elements, $x\varepsilon\{1, ... , X\}$, and $X$ is less than or equal to $N$. When $X$ is less than $N$, values of first $x1$ elements and values of last $x2$ elements in [$e(n)$] are 0, and an $(x1 + 1)^{th}$ element to an $(N - x2)^{th}$ element in [$e(n)$] are [$f(x)$], where a sum of $x1$ and $x2$ is $N - X$, $x1$ is an integer greater than or equal to 0, and $x2$ is an integer greater than or equal to 0; or when $X$ is equal to $N$, [$e(n)$] is [$f(x)$]. It may be understood that, [$f(x)$] is a to-be-sent modulation symbol sequence, and each element in [$f(x)$] corresponds to one modulation symbol; [$e(n)$] is [$f(x)$], or [$e(n)$] is a sequence obtained through a zero padding operation is performed on [$f(x)$]; and [$d(n)$] is a sequence obtained after Fourier transform is performed on [$e(n)$]. In this way, a sequence length of [$d(n)$] can be consistent with a sequence length of [$a(n)$], so that it is easy for [$a(n)$] to process [$d(n)$].

Further, the method according to the first aspect further includes: sending or receiving first indication information, where the first indication information indicates $X$ and at least one of $x1$ and $x2$. In this way, a zero padding manner of [$f(x)$] may be determined based on the first indication information. For example, when the first indication information indicates $X$ and $x1$, $x1$ may be subtracted from $X$, to determine $x2$, that is, $x1$ elements whose values are 0 are added to a head of a sequence of [$f(x)$], and $x2$ elements whose values are 0 are added to a tail of the sequence of [$f(x)$]. It may be understood that, when the first apparatus is a network apparatus, the network apparatus may send the first indication information, so that the second apparatus (for example, a terminal apparatus) demodulates the received first signal based on the first indication information. When the first apparatus is a terminal apparatus, the terminal apparatus may receive the first indication information from the second apparatus (for example, a network apparatus), to generate the first signal based on the first indication information.

In a possible design solution, the method according to the first aspect further includes: sending or receiving second indication information, where the second indication information indicates at least one of $\alpha$, $\beta$, and $\gamma$, and/or a value of each element in [$b(n)$]. It may be understood that when the first apparatus is a network apparatus, the network apparatus may send the second indication information, so that the second apparatus (for example, a terminal apparatus) determines [$a(n)$] and/or [$b(n)$] based on the second indication information, and demodulates the received first signal based on [$a(n)$] and/or [$b(n)$]. When the first apparatus is a terminal apparatus, the terminal apparatus may receive the second indication information from the second apparatus (for example, a network apparatus), and determine [$a(n)$] and/or [$b(n)$] based on the second indication information, to generate the first signal based on [$a(n)$] and/or [$b(n)$].

Optionally, the first indication information is carried in downlink control information DCI, and/or the second indication information is carried in radio resource control RRC layer signaling or media access control MAC layer signaling. In this way, flexibility of the first indication information can be improved, and overheads of the second indication information can be reduced.

In a possible design solution, generating the first signal based on [$c(n)$] includes: generating the first signal by performing inverse Fourier transform on [$c(n)$]. In this way, the frequency domain signal ([$c(n)$]) may be converted into a time domain signal (the first signal), to ensure that the first signal is successfully sent.

According to a second aspect, a communication method is provided. The method may be performed by a second apparatus, or may be performed by a part of the second apparatus, for example, a processor, a chip, or a chip system of the second apparatus, or may be implemented by a logical module or software that can implement all or some functions of the second apparatus. The following uses an example in which the method is performed by the second apparatus for description. The method includes: receiving a first signal; and demodulating the first signal. The first signal is determined based on [$c(n)$], [$c(n)$] is determined based on [$a(n)$] and [$b(n)$], [$a(n)$], [$b(n)$], and [$c(n)$] each include N elements, $n\in\{1, ... , N\}$, and N is a positive integer. The elements in [$a(n)$] satisfy $a(n) = e^{-j\frac{2\pi}{N}(\alpha n^2 + \beta n + \gamma)}$, and $\alpha$, $\beta$, and $\gamma$ are predetermined coefficients. The elements in [$b(n)$] meet a first feature, a second feature, a third feature, or a fourth feature. The first feature is that when $n$ is less than $k$, $b(n)$ is less than $b(n + 1)$, or when $n$ is greater than $k$, $b(n)$ is less than $b(n - 1)$, the second feature is that when $n$ is less than $k$, $b(n)$ is greater than $b(n + 1)$, or when $n$ is greater than $k$, $b(n)$ is greater than $b(n - 1)$, the third feature is that when $n$ is less than $k1$, $b(n)$ is greater than $b(n + 1)$, when $n$ is greater than or equal to $k1$ and less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than N.

In a possible design solution, [$c(n)$] is obtained by processing [$d(n)$] based on [$a(n)$] and [$b(n)$], [$d(n)$] includes N elements, and an element in [$c(n)$] is represented by the following: $c(n) = b(n) * a(n) * d(n)$.

Optionally, [$d(n)$] is obtained by performing Fourier transform on [$e(n)$], [$e(n)$] is determined based on [$f(x)$], [$f(x)$] carries information, [$f(x)$] includes $X$ elements, $x\in\{1, ..., X\}$, and $X$ is less than or equal to $N$. When $X$ is less than $N$, values of first $x1$ elements and values of last $x2$ elements in [$e(n)$] are 0, and an $(x1 + 1)^{th}$ element to an $(N - x2)^{th}$ element in [$e(n)$] are [$f(x)$], where a sum of $x1$ and $x2$ is $N - X$, $x1$ is an integer greater than or equal to 0, and $x2$ is an integer greater than or equal to 0; or when $X$ is equal to $N$, $[e(n)]$ is $[f(x)]$.

Further, the method according to the second aspect further includes: receiving or sending first indication information, where the first indication information indicates $X$ and at least one of $x1$ and $x2$.

In a possible design solution, the method according to the second aspect further includes: receiving or sending second indication information, where the second indication information indicates at least one of $\alpha$, $\beta$, and $\gamma$, and/or a value of each element in $[b(n)]$.

Optionally, the first indication information is carried in downlink control information DCI, and/or the second indication information is carried in radio resource control RRC layer signaling or media access control MAC layer signaling.

In a possible design solution, the first signal is obtained by performing inverse Fourier transform on $[c(n)]$.

In addition, for technical effects of the method according to the second aspect, refer to the technical effects of the method according to the first aspect. Details are not described herein again.

According to a third aspect, a communication apparatus is provided. The communication apparatus includes modules configured to perform the method according to the first aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus is caused to perform the method according to the first aspect.

It may be understood that the communication apparatus according to the third aspect may be a terminal or a network apparatus, for example, a remote device, or may be a chip (system) or another part or component that can be disposed in the terminal or the network apparatus, or may be an apparatus that includes the terminal or the network apparatus. This is not limited in this application.

In addition, for technical effects of the communication apparatus according to the third aspect, refer to the technical effects of the method according to the first aspect. Details are not described herein again.

According to a fourth aspect, a communication apparatus is provided. The communication apparatus includes modules configured to perform the method according to the second aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is caused to perform the method according to the second aspect.

It may be understood that the communication apparatus according to the fourth aspect may be a terminal or a network apparatus, for example, a remote device, or may be a chip (system) or another part or component that can be disposed in the terminal or the network apparatus, or may be an apparatus that includes the terminal or the network apparatus. This is not limited in this application.

In addition, for technical effects of the communication apparatus according to the fourth aspect, refer to the technical effects of the method according to the second aspect. Details are not described herein again.

According to a fifth aspect, a communication apparatus is provided. The communication apparatus includes a processor, and when the processor executes computer instructions, the communication apparatus is caused to perform the method according to any one of the possible implementations of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory may be integrated with the processor, or may be disposed separately. The memory may be configured to store a computer program and/or data related to the method according to any one of the first aspect or the second aspect.

In embodiments of this application, the communication apparatus according to the fifth aspect may be the terminal or the network apparatus according to any one of the first aspect or the second aspect, or a chip (system) or another part or component that may be disposed in the terminal or the network apparatus, or an apparatus that includes the terminal or the network apparatus.

In addition, for technical effects of the communication apparatus according to the fifth aspect, refer to the technical effects of the method according to any one of the possible implementations of the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect or the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments of this application, the communication apparatus according to the sixth aspect may be the terminal or the network apparatus according to any one of the first aspect or the second aspect, or a chip (system) or another part or component that may be disposed in the terminal or the network apparatus, or an apparatus that includes the terminal or the network apparatus.

In addition, for technical effects of the communication apparatus according to the sixth aspect, refer to the technical effects of the method according to any possible implementation of the first aspect or the second aspect. Details are not described herein again.

According to a seventh aspect, a communication apparatus is provided, and includes a processor and a memory. The memory is configured to store a computer program, and when the processor executes the computer program, the communication apparatus is caused to perform the method according to any one of the implementations of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the terminal or the network apparatus according to any one of the first aspect or the second aspect, or a chip (system) or another part or component that may be disposed in the terminal or the network apparatus, or an apparatus that includes the terminal or the network apparatus.

In addition, for technical effects of the communication apparatus according to the seventh aspect, refer to the technical effects of the method according to any one of the implementations of the first aspect or the second aspect. Details are not described herein again.

According to an eighth aspect, a communication chip is provided. The communication chip stores instructions, and when the chip runs on a communication device, the method according to any one of the implementations of the first aspect or the second aspect is implemented.

According to a ninth aspect, a communication chip is provided, and includes a logic circuit and a communication interface. The logic circuit is configured to execute computer instructions, the communication interface is used for the communication chip to communicate with another apparatus or chip, and when the logic circuit executes the computer instructions, the method according to any one of the implementations of the first aspect or the second aspect is implemented.

According to a tenth aspect, a communication system is provided. The communication system includes an apparatus configured to perform the method according to the first aspect and/or an apparatus configured to perform the method according to the second aspect.

According to an eleventh aspect, a computer-readable storage medium is provided, and includes a computer program or instructions. When the computer program or the instructions are run on a computer, the computer is caused to perform the method according to any one of the possible implementations of the first aspect or the second aspect.

According to a twelfth aspect, a computer program product is provided, and includes a computer program or instructions. When the computer program or the instructions are run on a computer, the computer is caused to perform the method according to any one of the possible implementations of the first aspect or the second aspect.

## BRIEF DESCRIPTION OF DRAWINGS

FIG. 1 is a diagram of a scenario of integrated communication and sensing according to an embodiment of this application;

FIG. 2 is a diagram of a plurality of sensed sub-scenarios according to an embodiment of this application;

FIG. 3 is a diagram 1 of an architecture of a communication system according to an embodiment of this application;

FIG. 4 is a diagram 2 of an architecture of a communication system according to an embodiment of this application;

FIG. 5 is a schematic flowchart 1 of a communication method according to an embodiment of this application;

FIG. 6 is a diagram of obtaining a first signal according to an embodiment of this application;

FIG. 7 is a schematic flowchart 2 of a communication method according to an embodiment of this application;

FIG. 8 is a schematic flowchart 3 of a communication method according to an embodiment of this application;

FIG. 9 is a diagram 1 of a structure of a communication apparatus according to an embodiment of this application; and

FIG. 10 is a diagram 2 of a structure of a communication apparatus according to an embodiment of this application.

## DESCRIPTION OF EMBODIMENTS

For ease of understanding, the following first describes technical terms in embodiments of this application.

1. Integrated communication and sensing

In a process of evolution from 5G to a 5G-advanced technology, integrated communication and sensing is considered to be one of key technologies that can extend a service capability of a mobile communication network. A core idea of the integrated communication and sensing technology is to add a sensing capability to the mobile communication network, and construct a capability of detecting, tracking, and imaging a target, so that communication and sensing capabilities are integrated into one network, thereby achieving harmonious coexistence and even mutual benefit.

A technical principle of sensing is different from that of communication. During the communication, a transmit end modulates information on a radio wave and sends the modulated radio wave to a receive end, and the receive end demodulates a signal carried on the radio wave to obtain the information. However, during the sensing, a transmit end needs to send a radio wave in a specific direction. When the radio wave irradiates a surface of a target, a reflected wave is generated. Then, a receive end receives and processes the reflected wave to obtain information such as a position, a speed, and a type of the target.

There are two types of sensing modes: monostatic sensing and bistatic sensing. The monostatic sensing means that a transmit end and a receive end of a sensing signal are a same device. In a sensing signal process, this sensing station not only needs to send the sensing signal, but also needs to receive a reflected signal of the sensing signal from a surface of a target.

Therefore, the monostatic sensing mode is also referred to as transmitter-receiver mode. For the bistatic sensing, a transmit end and a receive end of a sensing signal are two different devices. In a sensing signal process, after a sensing station A sends the sensing signal, a sensing station B receives a reflected signal of the signal from a surface of a target. Therefore, the bistatic sensing mode is also referred to as an A as transmitter and B as receiver mode.

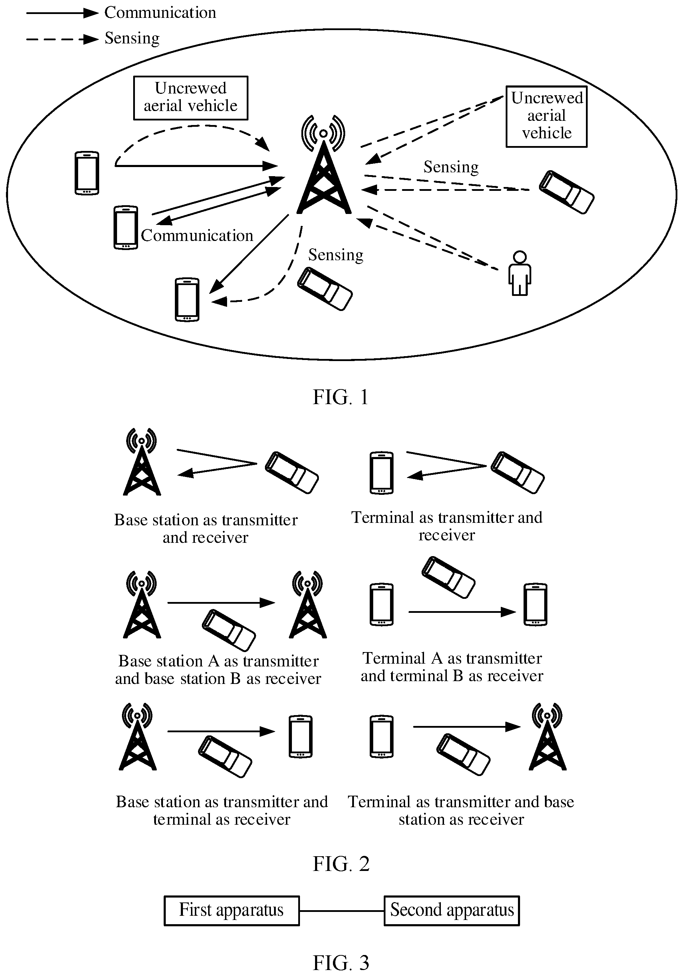

For example, as shown in FIG. 1, in a communication network, when a terminal device communicates with a network device, an object that does not have a communication function can also be sensed. A sensed target is not limited to a vehicle, a low-altitude uncrewed aerial vehicle, or a pedestrian, and also includes another moving or static object. As shown in FIG. 2, in an entire scenario, from a perspective of a sensing mode, the following six sub-scenarios may be included: base station as transmitter and receiver, terminal as transmitter and receiver, base station A as transmitter and base station B as receiver, terminal A as transmitter and terminal B as receiver, base station as transmitter and terminal as receiver, and terminal as transmitter and base station as receiver.

2. OFDM waveform technology

Currently, an OFDM waveform technology is used for a communication signal. In the OFDM waveform technology, orthogonal subcarriers can be constructed in frequency domain, and to-be-sent modulation symbols are mapped to different subcarriers in frequency domain, so that different modulation symbols can be simultaneously sent. Specifically, an OFDM signal may be generated through inverse discrete Fourier transform (inverse discrete Fourier transform, IDFT). An expression of the OFDM signal is:

$$s(t) = \sum_{k=0}^{M} a(k)e^{j2\pi(k-\Delta k)\Delta f(t-\Delta t)} \quad (1).$$

$a(k)$ is a to-be-sent modulation symbol, $s(t)$ is a signal using an OFDM waveform, $k$ is a subcarrier index, $M$ is a quantity of subcarriers, $\Delta f$ is a subcarrier spacing, $t$ is time, and $\Delta k$ and $\Delta t$ are predetermined parameters. It may be understood that when a transmit end sends a signal to a receive end by using the OFDM waveform, the transmit end may generate an OFDM signal from a to-be-sent modulation symbol according to the foregoing Formula (1).

Through research, it is found that there is a large gap between performance of the OFDM waveform used for sensing and optimal sensing performance, and joint optimal performance of communication and sensing cannot be achieved. In addition, when a plurality of users use a frequency division multiplexing manner, a bandwidth occupied by each user is reduced, and sensing performance (such as accuracy and resolution) is poor. Therefore, how to improve sensing performance of a communication signal while communication performance is ensured is a hot topic currently discussed.

For the foregoing technical problem, an embodiment of this application provides the following technical solutions, to improve the sensing performance of the communication signal while the communication performance of a communication system is ensured.

The following describes technical solutions of this application with reference to accompanying drawings.

The technical solutions in embodiments of this application may be applied to various communication systems, for example, a 4th generation (4th generation, 4G) mobile communication system, such as a long term evolution (long term evolution, LTE) system, a 5th generation (5th generation, 5G) mobile communication system, such as a new radio (new radio, NR) system, and a communication system evolved after 5G, such as a 6th generation (6th generation, 6G) mobile communication system, or may be applied to a wireless fidelity (wireless fidelity, Wi-Fi) system, a vehicle to everything (vehicle to everything, V2X) communication system, a device-to-device (device-to-device, D2D) communication system, an internet of vehicles communication system, and the like.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. Terms "of (of)", " relevant (relevant)", and "corresponding (corresponding)" may be interchangeably used sometimes. It should be noted that meanings expressed by the terms are matchable when differences of the terms are not emphasized. In addition, "/" mentioned in this application may indicate an "or" relationship. In addition, sending to A, sending to A, sending to A, or the like mentioned in embodiments of this application is a sending behavior in which A is used as a destination address, and the sending behavior may be directly or indirectly sent to A. Likewise, receiving from A, receiving from A, or the like mentioned in embodiments of this application is a receiving behavior in which A is used as a source address, and may be directly or indirectly receiving from A.

In embodiments of this application, sometimes a subscript, for example, $W_1$, may be written incorrectly in a non-subscript form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 3 is first used as an example to describe in detail a communication system applicable to embodiments of this application. For example, FIG. 3 is a diagram of an architecture of a communication system to which a communication method according to embodiments of this application is applicable.

As shown in FIG. 3, the communication system includes a first apparatus and a second apparatus. The first apparatus may be a terminal device or a chip of the terminal device, and the second apparatus may be a network device or a chip of the network device; or the first apparatus may be a network device or a chip of the network device, and the second apparatus may be a terminal device or a chip of the terminal device. For the terminal device and the network device, refer to related descriptions of the following "terminal 120" and "network device 110". Details are not described herein again. It may be understood that the communication system may be used in a scenario of integrated communication and sensing. For details about the scenario, refer to related descriptions of the foregoing "1. Integrated communication and sensing". Details are not described herein again.

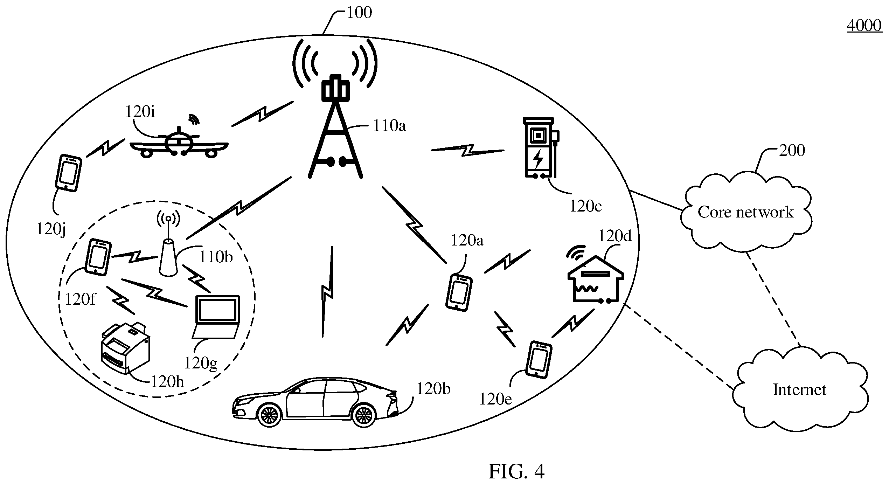

For ease of understanding of embodiments of this application, an application scenario to which this application is applicable is described by using an architecture of a communication system shown in FIG. 4 as an example. FIG. 4 is a diagram of a possible and non-limitative system. As shown in FIG. 4, the communication system 4000 includes a radio access network (radio access network, RAN) 100 and a core network (core network, CN) 200. The RAN 100 includes at least one network device (for example, 110a and 110b in FIG. 4, which are collectively referred to as 110) and at least one terminal (for example, 120a to 120j in FIG. 4, which are collectively referred to as 120). The RAN 100 may further include another RAN node, for example, a wireless relay device and/or a wireless backhaul device (not shown in FIG. 4). The terminal 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G mobile communication system, a 5G mobile communication system, or a system evolving after 5G (for example, a 6G mobile communication system). The RAN 100 may alternatively be an open radio access network (open radio access network, O-RAN or ORAN), a cloud radio access network (cloud radio access network, CRAN), or a Wi-Fi system. The RAN 100 may alternatively be a communication system that integrates two or more of the foregoing systems.

The first communication apparatus and the second communication apparatus provided in embodiments of this application may be used in the network device 110, or may be used in the terminal 120. It may be understood that, FIG. 4 shows only a possible architecture of the communication system to which embodiments of this application is applicable. In another possible scenario, the architecture of the communication system may alternatively include another device.

The network device 110 is a node in the radio access network (radio access network, RAN), and may also be referred to as an access network device or a RAN node (or device). The network device 110 is configured to assist the terminal in implementing radio access. A plurality of network devices 110 in the communication system 4000 may be nodes of a same type, or may be nodes of different types. In some scenarios, roles of the network device 110 and the terminal 120 are relative. For example, a network element 120i in FIG. 4 may be a helicopter or an uncrewed aerial vehicle, and may be configured as a mobile base station. For a terminal 120j that accesses the RAN 100 via the network element 120i, the network element 120i is a base station. However, for a base station 110a, the network element 120i is a terminal. The network device 110 and the terminal 120 are sometimes referred to as communication apparatuses. For example, network elements 110a and 110b in FIG. 4 may be understood as communication apparatuses having a base station function, and network elements 120a to 120j may be understood as communication apparatuses having a terminal function.

In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6th generation (6th generation, 6G) mobile communication system, a base station in a future mobile communication system, a satellite, an access point (access point, AP) in a Wi-Fi system, such as a home gateway, a router, a server, a switch, and a bridge, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 4), a micro base station or an indoor base station (for example, 110b in FIG. 4), a relay node or a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal in implementing radio access, and different network devices respectively implement some functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be mounted in the network device or used together with the network device.

The terminal 120 may also be referred to as user equipment (user equipment, UE), a mobile station (mobile station, MS), a mobile terminal (mobile terminal, MT), a user apparatus, a terminal device, an access terminal, a subscriber unit, a subscriber station, a mobile station, a remote station, a remote terminal, a mobile device, a user terminal, a terminal, a wireless communication device, a user agent, a user apparatus, or the like, or a device configured to provide voice or data connectivity for a user, or may be an internet of things device. For example, the terminal device includes a handheld device, a vehicle-mounted device, or the like that has a wireless connection function. Currently, the terminal device may be a mobile phone (mobile phone), a tablet computer (Pad), a computer having a wireless transceiver function, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A form of the terminal device is not limited in embodiments of this application. An apparatus configured to implement a function of the terminal device may be a terminal device, or may be an apparatus, for example, a chip system, that can support the terminal device in implementing the function. The apparatus may be mounted in the terminal device or used together with the terminal device. In this embodiment of this application, the chip system may include a chip, or may include a chip and another discrete component.

It should be noted that the solutions in embodiments of this application may alternatively be applied to another communication system, and a corresponding name may alternatively be replaced with a name of a corresponding function in the another communication system.

In a communication system, $[b(n)]$ is a spectral shaping coefficient, and when elements in $[b(n)]$ meet a first feature, a second feature, a third feature, or a fourth feature, an optimal compromise between communication and sensing performance can be implemented, so that the sensing performance can be improved while the communication performance of the communication system is ensured, that is, an optimal frequency shaping coefficient is adaptively selected to achieve joint optimal performance of communication and sensing. In addition, $[a(n)]$ is a constant modulus sequence, and elements in $[a(n)]$ satisfy $a(n) = e^{-j\frac{2\pi}{N}(\alpha n^2 + \beta n + \gamma)}$, so that a user signal can be extended on an entire carrier bandwidth. Therefore, the first signal is determined based on $[a(n)]$, so that each user signal can occupy the entire carrier bandwidth in a multi-user scenario, and sensing accuracy and resolution can be maintained.

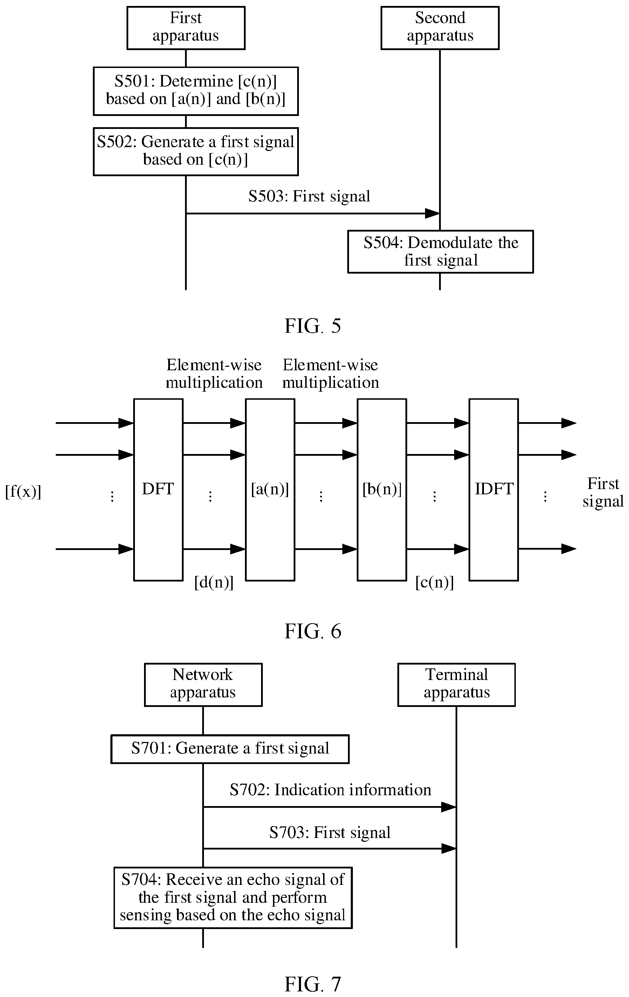

For ease of understanding, the following specifically describes a communication method provided in an embodiment of this application with reference to FIG. 5.

For example, FIG. 5 is a schematic flowchart of a communication method according to an embodiment of this application. The method is applicable to communication between the first apparatus and the second apparatus in the communication system.

As shown in FIG. 5, a procedure of the foregoing communication method is as follows.

S501: The first apparatus determines $[c(n)]$ based on $[a(n)]$ and $[b(n)]$.

$[a(n)]$ is a constant modulus sequence including N elements, $n \varepsilon \{1, \ldots, N\}$, and N is a positive integer. In other words, $[a(n)]$ includes the N elements, and a modulus value of each of the N elements is 1. It may be understood that the element may be a complex number element, that is, any element in $[a(n)]$ may be represented by using a complex number.

In a possible implementation, the elements in $[a(n)]$ satisfy $a(n) = e^{-j\frac{2\pi}{N}(\alpha n^2 + \beta n + \gamma)}$, and $\alpha$, $\beta$, and $\gamma$ are predetermined coefficients. Optionally, N, $\alpha$, and $\beta$ meet that a greatest common divisor of N and $2\alpha$ is 1, and/or a value of $\alpha N + \beta$ is an integer.

It may be understood that $\alpha$ is not 0, and $\beta$ and $\gamma$ may be 0. When $\beta$ and $\gamma$ are 0, the elements in $[a(n)]$

satisfy $a(n) = e^{-j\frac{2\pi}{N}(\alpha n^2)}$ .

[*b*(*n*)] is a spectral shaping coefficient, and includes N elements, that is, *[b(n)]* includes the N elements, *n*∈{1, ... , *N*}, and N is a positive integer. Any one of the N elements may be a real number, or may be a complex number. This is not limited.

In a first possible implementation, the elements in [*b*(*n*)] meet a first feature, and the first feature is that when *n* is less than *k*, *b*(*n*) is less than *b*(*n* + 1), or when *n* is greater than *k*, *b*(*n*) is less than *b*(*n* - 1), where *k* is a positive integer greater than 1 and less than N. It can be learned that, in this case, values of the elements in [*b*(*n*)] are in a trend of first increasing and then decreasing.

For example, when N is 12 and *k* is 6 or 7, [*b*(*n*)] may be {0.3,0.35,0.4,0.45, 0.5,0.6, 0.6, 0.5, 0.45, 0.4, 0.35, 0.3}.

For another example, when N is 24 and *k* is 12 or 13, [*b*(*n*)] may be {0.3,0.35,0.4,0.45, 0.5,0.55,0.6,0.65,0.7,0.75,0.8,0.9,0.9,0.8,0.75,0.7,0.65,0.6,0.55,0.5,0.45,0.4,0.35,0.3}.

When the elements in [*b*(*n*)] meet the first feature, joint optimal performance of communication and sensing can be achieved.

In a second possible implementation, the elements in [*b*(*n*)] meet a second feature, and the second feature is that when *n* is less than *k*, *b*(*n*) is greater than *b*(*n* + 1), or when *n* is greater than *k*, *b*(*n*) is greater than *b*(*n* - 1), where *k* is a positive integer greater than 1 and less than N. It can be learned that, in this case, values of the elements in [*b*(*n*)] are in a trend of first decreasing and then increasing.

For example, when N is 12 and *k* is 6 or 7, [*b*(*n*)] may be {0.6, 0.5, 0.45, 0.4, 0.35, 0.3,0.3,0.35,0.4,0.45, 0.5,0.6}.

For another example, when N is 24 and *k* is 12 or 13, [*b*(*n*)] may be {0.9,0.8,0.75,0.7,0.65,0.6,0.55,0.5,0.45,0.4,0.35,0.3,0.3,0.35,0.4,0.45, 0.5,0.55,0.6,0.65,0.7,0.75,0.8,0.9}.

When the elements in [*b*(*n*)] meet the second feature, joint optimal performance of communication and sensing can be achieved.

In a third possible implementation, the elements in [*b*(*n*)] meet a third feature, and the third feature is that when *n* is less than *k*1, *b*(*n*) is greater than *b*(*n* + 1), when *n* is greater than or equal to *k*1 and less than *k*2, *b*(*n*) is less than *b*(*n* + 1), when *n* is greater than or equal to *k*2 and less than *k*3, *b*(*n*) is greater than *b*(*n* + 1), or when *n* is greater than *k*3, *b*(*n*) is less than *b*(*n* + 1), where k1, *k*2, and *k*3 are all positive integers greater than 1 and less than N. It can be learned that, in this case, values of the elements in [*b*(*n*)] are in a trend of first decreasing, then increasing, then decreasing, and then increasing.

For example, when N is 15, *k*1 is 4, *k*2 is 8, and *k*3 is 12, [*b*(*n*)] may be {0.6, 0.5, 0.45, 0.4,0.45,0.5,0.6,0.65,0.6,0.5,0.45,0.4,0.45,0.5,0.6}.

For another example, when N is 23, *k*1 is 6, *k*2 is 12, and *k*3 is 18, [*b*(*n*)] may be {0.9,0.8,0.75,0.7,0.65,0.65,0.65,0.7,0.75,0.8,0.9,0.9,0.9,0.8,0.75,0.7,0.65,0.65,0.65,0.7,0.75,0.8,0.9}.

When the elements in [*b*(*n*)] meet the third feature, joint optimal performance of communication and sensing can be achieved.

In a fourth possible implementation, the elements in [*b*(*n*)] meet a fourth feature, and the fourth feature is that when *n* is less than *k*1, *b*(*n*) is less than *b*(*n* + 1), when *n* is greater than or equal to *k*1 and less than *k*2, *b*(*n*) is greater than *b*(*n* + 1), when *n* is greater than or equal to *k*2 and less than *k*3, *b*(*n*) is less than *b*(*n* + 1), or when *n* is greater than *k*3, *b*(*n*) is greater than *b*(*n* + 1), where *k*1, *k*2, and *k*3 are all positive integers greater than 1 and less than N. It can be learned that, in this case, values of the elements in [*b*(*n*)] are in a trend of first increasing, then decreasing, then increasing, and then decreasing.

For example, when N is 15, *k*1 is 4, *k*2 is 8, and *k*3 is 12, [*b*(*n*)] may be {0.45,0.5,0.6,0.65,0.6,0.5,0.45,0.4,0.45,0.5,0.6,0.65,0.6,0.5,0.45}.

For another example, when N is 23, *k*1 is 6, *k*2 is 12, and *k*3 is 18, [*b*(*n*)] may be {0.65,0.7,0.75,0.8,0.9,0.9,0.9,0.8,0.75,0.7,0.65,0.65,0.65,0.7,0.75,0.8,0.9,0.9,0.9,0.8,0.75,0.7,0.65}.

When the elements in [*b*(*n*)] meet the fourth feature, joint optimal performance of communication and sensing can be achieved.

It may be understood that the foregoing content describes a case in which the elements in [*b*(*n*)] meet different features. It may be further understood that, when *n* is equal to *k*, if elements before *b*(*k*) are in an increasing trend, and elements after *b*(*k*) are in a decreasing trend, *b*(*k*) may be *b*(*k* - 1), *b*(*k* + 1), or a value greater than *b*(*k* - 1) or *b*(*k* + 1); or if elements before *b*(*k*) are in a decreasing trend, and elements after *b*(*k*) are in an increasing trend, *b*(*k*) may be *b*(*k* - 1), *b*(*k* + 1), or a value less than *b*(*k* - 1) or *b*(*k* + 1). This is not limited.

In addition, a value of *k* may be a value of a middle position of N, the value of the middle position includes an intermediate value of N and there are m values at each of two sides of the intermediate value, and m may be set based on an actual situation. For example, when N is 12 and m is 2, intermediate values are 6 and 7. When the intermediate value is 6, there are two values at each of two sides of the intermediate value, namely, 4, 5, 7, and 8. When the intermediate value is 7, there are two values at each of two sides of the intermediate value, namely, 5, 6, 8, and 9, that is, the value of *k* is any integer in 4, 5, 6, 7, and 8, or the value of *k* is any integer in 5, 6, 7, 8, and 9.

[*c*(*n*)] is a frequency domain signal determined based on [*a*(*n*)] and [*b*(*n*)], [*c*(*n*)] includes N elements, *n*∈{1, ..., *N*}, and N is a positive integer.

In a possible implementation, determining [*c*(*n*)] based on [*a*(*n*)] and [*b*(*n*)] may specifically include: processing [*d*(*n*)] based on [*a*(*n*)] and [*b*(*n*)] to obtain [*c*(*n*)], that is, [c(n)] is obtained by processing [d(n)] based on [a(n)] and [b(n)], and an element in [c(n)] is represented by the following: c(n) = b(n) * a(n) * d(n).

[d(n)] is obtained by performing Fourier transform (Fourier transform, DFT) on [e(n)], and [f(x)] is determined based on [e(n)]. In other words, [e(n)] may be determined based on [f(x)], and then [d(n)] is determined based on [e(n)]. As shown in FIG. 6, for ease of understanding, the following provides descriptions in this sequence.

[f(x)] may be a preset modulation symbol or a to-be-sent modulation symbol. The to-be-sent modulation symbol may be one or more modulation symbols. Any modulation symbol in the to-be-sent modulation symbol may be represented by using a complex number, for example, $a + j * b$, where $a$ is a real part of the modulation symbol, $b$ is an imaginary part of the modulation symbol, and $j$ is $\sqrt{-1}$. The modulation symbol may be obtained in a plurality of manners, for example, binary phase shift keying (binary phase shift keying, BPSK), $\pi/2$ BPSK, quadrature phase shift keying (quadrature phase shift keying, QPSK), or quadrature amplitude modulation (quadrature amplitude modulation, QAM). This is not limited in embodiments of this application. In other words, [f(x)] carries information. [f(x)] includes $X$ elements, $x \in \{1, ... , X\}$, and $X$ is an integer less than or equal to $N$.

[e(n)] is determined based on [f(x)], and [e(n)] includes [f(x)]. In addition, [e(n)] includes $N$ elements, $n \in \{1, ..., N\}$, and N is a positive integer. A determining manner of [e(n)] is related to values of $X$ and $N$, and is specifically described below.

When $X$ is equal to $N$, [e(n)] is [f(x)], that is, [f(x)] may be directly assigned to [e(n)].

Alternatively, when $X$ is less than $N$, values of first x1 elements and values of last $x2$ elements in [e(n)] are 0, and an $(x1 + 1)^{th}$ element to an $(N - x2)^{th}$ element in [e(n)] are [f(x)], where a sum of x1 and x2 is N - X, x1 is an integer greater than or equal to 0, and x2 is an integer greater than or equal to 0. In other words, in this case, a zero padding operation may be performed on [f(x)], that is, (N - X) elements whose values are 0 are added to [f(x)], so that a sequence obtained through the zero padding operation includes $N$ elements, that is, a length of the sequence obtained through the zero padding operation is consistent with a length of [a(n)]. The zero padding operation includes three manners: padding a head of a sequence with zeros, padding a tail of the sequence with zeros, and padding the head and the tail of the sequence with zeros. The following separately provides descriptions.

Manner 1: Pad the head of the sequence with zeros.

Specifically, (N - X) elements whose values are 0 are added to the head of a sequence of [f(x)]. In this case, a sequence obtained through the zero padding operation may be {0,0, ... ,0,f(1), ..., f(X)}. In this case, x1 is N - X, and x2 is 0.

Manner 2: Pad the tail of the sequence with zeros.

Specifically, (N - X) elements whose values are 0 are added to the tail of a sequence of [f(x)]. In this case, a sequence obtained through the zero padding operation may be {f(1), ... , f(X), 0,0, ... ,0,}. In this case, x1 is 0, and x2 is N - X.

Manner 3: Pad the head and the tail of the sequence with zeros.

Specifically, $x1$ elements whose values are 0 are added to the head of a sequence of [f(x)], and $x2$ elements whose values are 0 are added to the tail of the sequence of [f(x)]. In this case, a sequence obtained through the zero padding operation may be {0, ... , 0, f(1), ... , f(X), 0, ...,0}.

After the zero padding operation is performed on [f(x)], the sequence obtained through the zero padding operation may be obtained, and the sequence is [e(n)]. After obtaining [e(n)], the first apparatus may perform an N-point Fourier transform operation on [e(n)] to obtain [d(n)], that is, $d(n) = \frac{1}{\sqrt{N}} \sum_{n=0}^{N-1} e(n) e^{j2\pi \frac{n}{N}k}$. It can be learned that [d(n)] includes N elements, $n \in \{1, ... , N\}$, N is a positive integer, and [d(n)] may be obtained by performing Fourier transform on [e(n)].

After obtaining [d(n)], the first apparatus may first process [d(n)] by using [a(n)], that is, perform element-wise multiplication of [a(n)] and [d(n)], to obtain [B(n)], and then perform spectrum shaping processing on [B(n)] by using [b(n)], that is, perform element-wise multiplication of [b(n)] and [B(n)], to obtain [c(n)]. In other words, the element in [c(n)] may be represented by the following: c(n) = b(n) * a(n) * d(n).

It may be understood that [B(n)] may alternatively be obtained based on [d(n)] and Fourier-transformed [a(n)], that is, a Fourier transform operation is performed on [a(n)] to obtain [A(n)], and then element-wise multiplication is performed on [A(n)] and [d(n)] to obtain [B(n)]. In this case, the element in [c(n)] may be represented by the following: c(n) = b(n) * A(n) * d(n).

It may be further understood that determining [c(n)] based on [a(n)] and [b(n)] (S501) may alternatively be implemented in another manner. This is not limited in this embodiment of this application.

S502: The first apparatus generates a first signal based on [c(n)].

In a possible implementation, generating the first signal based on [c(n)] may specifically include: generating the first signal by performing inverse Fourier transform on [c(n)], that is, the first signal is obtained by performing the inverse Fourier transform on [c(n)]. In other words, as shown in FIG. 6, an inverse Fourier transform operation such as inverse fast Fourier transform (inverse fast Fourier transform, IFFT) may be performed on [c(n)] to obtain the first signal. An expression of the first signal is:

$$s(t) = \sum_{n=0}^{N} c(n)e^{j2\pi(n-\Delta n)\Delta f(t-\Delta t)} \quad (2).$$

$s(t)$ is the first signal, $n$ is a subcarrier index, $N$ is a quantity of subcarriers, $\Delta f$ is a subcarrier spacing, $t$ is time, and $\Delta n$ and $\Delta t$ are preset parameters.

It may be understood that $[c(n)]$ may alternatively be converted into the first signal by using another method in which a frequency domain signal can be converted into a time domain signal. This is not limited in this embodiment of this application.

S503: The first apparatus sends the first signal, and correspondingly, the second apparatus receives the first signal.

S504: The second apparatus demodulates the first signal.

After receiving the first signal, the second apparatus may demodulate the first signal to obtain a modulation symbol. A demodulation manner is an inverse process of generating the first signal. Specifically, the second apparatus may first perform Fourier transform on the first signal to obtain $[c(n)]$, then perform inverse processing of spectrum shaping on $[c(n)]$ by using $[b(n)]$, to obtain $[d(n)]$, then process $[d(n)]$ by using $[a(n)]$, to obtain $[e(n)]$, and finally process $[e(n)]$ to obtain $[f(x)]$, so as to obtain the information carried in $[f(x)]$.

In conclusion, in this embodiment of this application, because the elements in $[b(n)]$ meet the first feature, the second feature, or the third feature, an optimal compromise between communication and sensing performance can be implemented, so that the sensing performance can be improved while communication performance of a communication system is ensured, that is, an optimal frequency shaping coefficient is adaptively selected to achieve joint optimal performance of communication and sensing. In addition, because $[a(n)]$ is the constant modulus sequence, and the elements in $[a(n)]$

satisfy $a(n) = e^{-j\frac{2\pi}{N}(\alpha n^2 + \beta n + \gamma)}$, so that the user signal can be extended on the entire carrier bandwidth. Therefore, each user signal can occupy the entire carrier bandwidth in a multi-user scenario, and sensing accuracy and resolution can be maintained.

Optionally, with reference to the foregoing embodiment, when the first apparatus is a network apparatus, for example, a network device or a chip of the network device, and when the second apparatus is a terminal apparatus, for example, a terminal device or a chip of the terminal device, before the second apparatus demodulates the first signal (S504), the communication method may further include: The first apparatus sends first indication information, where the first indication information indicates $X$ and at least one of $x1$ and $x2$, and correspondingly, the second apparatus receives the first indication information from the first apparatus.

The first indication information indicates $X$ and $x1$, $X$ and $x2$, or $X$, $x1$, and $x2$. $X$ is a quantity of elements in $[f(x)]$, that is, a quantity of to-be-sent modulation symbols.

$x1$ is a quantity of zeros with which the head of $[f(x)]$ is padded. $x2$ is a quantity of zeros with which the tail of $[f(x)]$ is padded. The sum of $x1$ and $x2$ is $N - X$, $x1$ is an integer greater than or equal to 0, and $x2$ is an integer greater than or equal to 0. Therefore, a zero padding manner of $[f(x)]$ may be determined based on $X$ and at least one of $x1$ and $x2$. For example, if $N$ is 20, $X$ is 12, and $x1$ is 5, $x2$ is 3, and the zero padding manner of $[f(x)]$ is padding the head and the tail of the sequence with zeros. For another example, if $N$ is 30, $X$ is 20, and $x2$ is 10, $x1$ is 0, and the zero padding manner of $[f(x)]$ is padding the tail of the sequence with zeros.

The first indication information may be a value of $X$ and at least one of a value of $x1$ and a value of $x2$, or may be index information indicating the value of $X$ and at least one of the value of $x1$ and the value of $x2$. For example, as shown in the following Table 1, different indexes are set for all sets of values of $X$ and $x1$, and the first indication information may be 00, 01, 10, or 11. It may be understood that Table 1 is merely an example, and different correspondences between an index and a value may be set based on an actual situation. This is not limited. In addition, when the first indication information is an index, a correspondence between an index and a value may be preset or predefined in a protocol, that is, both the first apparatus and the second apparatus may obtain the correspondence.

Table 1

| Index | $X$ and $x1$ |
|-------|-------------|
| 00 | $X$=20 and $x1$=1 |
| 01 | $X$=20 and $x1$=3 |
| 10 | $X$=20 and $x1$=5 |
| 11 | $X$=20 and $x1$=7 |

After receiving the first indication information, the second apparatus may determine the zero padding manner of $[f(x)]$ based on the first indication information, so that the second apparatus demodulates the first signal.

It may be understood that the first apparatus may set different first indication information for different second apparatuses, that is, different second apparatuses may correspond to different values of $X$ and at least one of $x1$ and $x2$. In addition, in different time periods, the first indication information may be further changed correspondingly. To be specific, different values of $X$ and at least one of $x1$ and $x2$ are used in different time periods. This is not limited in this embodiment of this application.

Further, the first indication information may be carried in downlink control information (Downlink Control Information, DCI). It may be understood that the first indication information may alternatively be carried in another message based on an actual situation. This is not limited.

Optionally, with reference to the foregoing embodiment, when the first apparatus is a network apparatus, for example, a network device or a chip of the network device, and when the second apparatus is a terminal apparatus, for example, a terminal device or a chip of the terminal device, before the second apparatus demodulates the first signal (S504), the communication method may further include: The first apparatus sends second indication information, where the second indication information indicates at least one of $\alpha$, $\beta$, and $\gamma$, and/or a value of each element in $[b(n)]$, and correspondingly, the second apparatus receives the second indication information from the first apparatus.

The second indication information indicates a coefficient of $[a(n)]$, for example, at least one of $\alpha$, $\beta$, and $\gamma$, and/or the value of each element in $[b(n)]$. The first indication information may be a value of the coefficient of $[a(n)]$, and/or the value of each element in $[b(n)]$, or may be an index of the coefficient used in $[a(n)]$, and/or index information of the value of each element in $[b(n)]$. For example, as shown in the following Table 2 and Table 3, there are two types of values of the coefficient of $[a(n)]$, there are four types of values of each element in $[b(n)]$, and all types of values correspond to different indexes. In this case, the first indication information may include two fields, where one field indicates the index of the value of the coefficient of $[a(n)]$, and the other field indicates an index of the value of each element in $[b(n)]$. It may be understood that Table 2 and Table 3 are merely examples, and different correspondences between an index and a value may be set based on an actual situation. This is not limited. In addition, when the second indication information is an index, a correspondence between an index and a value may be preset or predefined in a protocol, that is, both the first apparatus and the second apparatus may obtain the correspondence.

Table 2

| Index | $\alpha$, $\beta$, and $\gamma$ |
|-------|----------------------------------|
| 0 | $\alpha$, $\beta$, and $\gamma$ use a first set of values |
| 1 | $\alpha$, $\beta$, and $\gamma$ use a second set of values |

Table 3

| Index | Value of each element in $[b(n)]$ |
|-------|-----------------------------------|
| 00 | $[b(n)]$ uses a first set of values |
| 01 | $[b(n)]$ uses a second set of values |
| 10 | $[b(n)]$ uses a third set of values |
| 11 | $[b(n)]$ uses a fourth set of values |

After receiving the second indication information, the second apparatus may determine $[a(n)]$ and/or $[b(n)]$ based on the first indication information, so that the second apparatus demodulates the first signal.

It may be understood that the first apparatus may set same second indication information for different second apparatuses, that is, different second apparatuses may use the same second indication information. In addition, in a long time period, the second indication information may not be changed.

Further, the second indication information is carried in radio resource control (radio resource control, RRC) layer signaling or media access control (media access control, MAC) layer signaling. It may be understood that the second indication information may alternatively be carried in another message based on an actual situation. This is not limited.

Optionally, with reference to the foregoing embodiment, when the first apparatus is a terminal apparatus, and the second apparatus is a network apparatus, before determining $[c(n)]$ based on $[a(n)]$ and $[b(n)]$ (S501), the communication method may further include: The second apparatus sends first indication information, where the first indication information indicates $X$ and at least one of $x1$ and $x2$, and correspondingly, the first apparatus receives the first indication information from the second apparatus.

For the first indication information, refer to the foregoing related descriptions. Details are not described herein again. It may be understood that the first apparatus sends the first indication information before the second apparatus generates a first signal, so that after receiving the first indication information, the second apparatus may process $[f(x)]$ based on a zero padding manner indicated by the first indication information, to generate the first signal.

Optionally, with reference to the foregoing embodiment, when the first apparatus is a terminal apparatus, and the second apparatus is a network apparatus, before determining $[c(n)]$ based on $[a(n)]$ and $[b(n)]$ (S501), the communication method may further include: The second apparatus sends second indication information, where the second indication information indicates at least one of $\alpha$, $\beta$, and $\gamma$, and/or a value of each element in $[b(n)]$, and correspondingly, the first apparatus receives the second indication information from the second apparatus.

For the second indication information, refer to the foregoing related descriptions. Details are not described herein again. It may be understood that the first apparatus sends the first indication information before the second apparatus generates a first signal, so that after receiving the second indication information, the second apparatus generates the first signal based on $[a(n)]$ and $[b(n)]$ indicated by the second indication information.

For example, FIG. 7 is a schematic flowchart 2 of a communication method according to an embodiment of this application. The method is applicable to a downlink communication procedure in this embodiment of this application, and the method is applicable to communication between the first apparatus and the second apparatus in the foregoing communication system.

As shown in FIG. 7, a procedure of the foregoing communication method is as follows.

S701: A network apparatus generates a first signal.

For a manner of generating the first signal, refer to the related descriptions of "S501 and S502". Details are not described herein again.

S702: The network apparatus sends indication information, and correspondingly, a terminal apparatus receives the indication information.

The indication information may be the foregoing first indication information and/or second indication information. For the first indication information and the second indication information, refer to the foregoing related descriptions. Details are not described herein again.

S703: The network apparatus sends the first signal, and correspondingly, the terminal apparatus receives the first signal.

It may be understood that S702 and S703 may be performed simultaneously, or may be performed in sequence. For example, S702 is performed before S703, or S703 is performed before S702. This is not limited.

S704: The network apparatus receives an echo signal of the first signal and performs sensing based on the echo signal.

The network apparatus may perform sensing based on the first signal, the echo signal, time at which the network apparatus sends the first signal, and time at which the network apparatus receives the echo signal.

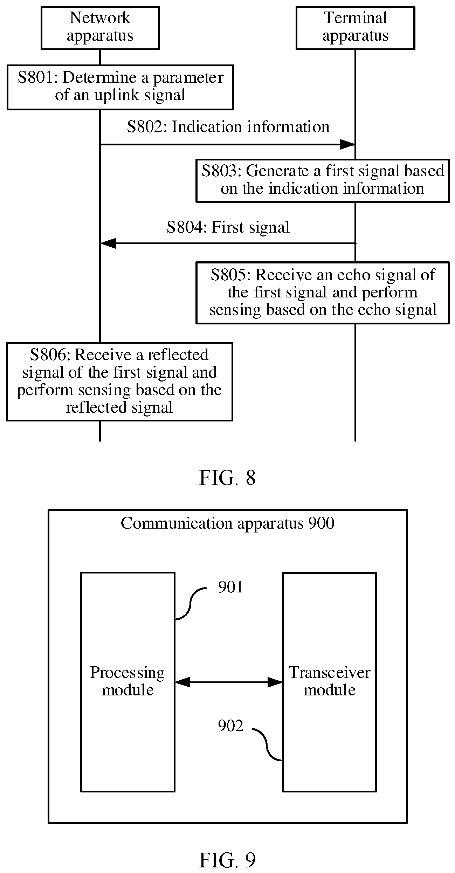

For example, FIG. 8 is a schematic flowchart 3 of a communication method according to an embodiment of this application. The method is applicable to an uplink communication procedure in this embodiment of this application, and the method is applicable to communication between the first apparatus and the second apparatus in the foregoing communication system.

As shown in FIG. 8, a procedure of the foregoing communication method is as follows.

S801: A network apparatus determines a parameter of an uplink signal.

The parameter of the uplink signal may be at least one of the following: a related parameter of a zero padding manner, a coefficient of [$a(n)$], and a value of each element in [$b(n)$]. The related parameter of the zero padding manner may be a value of $X$ and at least one of $x1$ and $x2$. The coefficient of [$a(n)$] may be a value of at least one of $\alpha$, $\beta$, and $\gamma$. For the related parameter of the zero padding manner, [$a(n)$], and [$b(n)$], refer to the foregoing related descriptions. Details are not described herein again.

S802: The network apparatus sends indication information, and correspondingly, a terminal apparatus receives the indication information from the network apparatus.

The indication information is information indicating the parameter of the uplink signal, and may be the foregoing first indication information and/or second indication information. For the first indication information and the second indication information, refer to the foregoing related descriptions. Details are not described herein again.

S803: The terminal apparatus generates a first signal based on the indication information.

For a manner of generating the first signal, refer to the related descriptions of "S501 and S502". Details are not described herein again.

S804: The terminal apparatus sends the first signal, and correspondingly, the network apparatus receives the first signal from the terminal apparatus.

S805: The terminal apparatus receives an echo signal of the first signal, and performs sensing based on the echo signal.

The terminal apparatus may perform sensing based on the first signal, the echo signal, time at which the terminal apparatus sends the first signal, and time at which the terminal apparatus receives the echo signal.

S806: The network apparatus receives a reflected signal of the first signal, and performs sensing based on the reflected signal.

The network apparatus may obtain sending time of the first signal. For example, the terminal apparatus sends the sending time of the first signal to the network apparatus along with the first signal. The network apparatus performs sensing based on time of the first signal, time at which the reflected signal is received, the first signal, and the reflected signal.

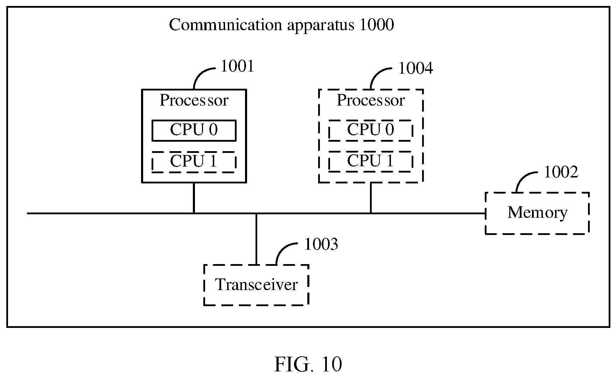

The foregoing describes in detail the communication method provided in embodiments of this application with reference to FIG. 5 to FIG. 8. The following describes in detail a communication apparatus configured to perform the communication method provided in embodiments of this application with reference to FIG. 9 and FIG. 10.

FIG. 9 is a diagram 1 of a structure of a communication apparatus according to an embodiment of this application. For example, as shown in FIG. 9, the communication apparatus 900 includes a processing module 901 and a transceiver module 902. For ease of description, FIG. 9 shows only main parts of the communication apparatus.

In some embodiments, the communication apparatus 900 is applicable to the communication system shown in FIG. 3, and performs a function of the first apparatus in the communication method shown in FIG. 5.

The processing module 901 is configured to determine [$c(n)$] based on [$a(n)$] and [$b(n)$], and generate a first signal based on [$c(n)$], and the transceiver module 902 is configured to send the first signal. [$a(n)$], [$b(n)$], and [$c(n)$] each include $N$ elements, $n \varepsilon \{1, ..., N\}$, and $N$ is a positive integer. The elements in [$a(n)$] satisfy

$$a(n) = e^{-j\frac{2\pi}{N}(\alpha n^2 + \beta n + \gamma)}$$, and $\alpha$, $\beta$, and $\gamma$ are

predetermined coefficients. The elements in [$b(n)$] meet a first feature, a second feature, a third feature, or a fourth feature. The first feature is that when $n$ is less than $k$, $b(n)$ is less than $b(n + 1)$, or when $n$ is greater than $k$, $b(n)$ is less than $b(n - 1)$, the second feature is that when $n$ is less than $k$, $b(n)$ is greater than $b(n + 1)$, or when $n$ is greater than $k$, $b(n)$ is greater than $b(n - 1)$, the third feature is that when $n$ is less than $k1$, $b(n)$ is greater than $b(n + 1)$, when $n$ is greater than or equal to $k1$ and less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than $N$.

In a possible design solution, the processing module 901 is specifically configured to process $[d(n)]$ based on $[a(n)]$ and $[b(n)]$ to obtain $[c(n)]$, $[d(n)]$ includes $N$ elements, and an element in $[c(n)]$ is represented by the following: $c(n) = b(n) * a(n) * d(n)$.

Optionally, $[d(n)]$ is obtained by performing Fourier transform on $[e(n)]$, $[e(n)]$ is determined based on $[f(x)]$, $[f(x)]$ carries information, $[f(x)]$ includes $X$ elements, $x \in \{1, ..., X\}$, and $X$ is a positive integer less than or equal to $N$. When $X$ is less than $N$, values of first $x1$ elements and values of last $x2$ elements in $[e(n)]$ are 0, and an $(x1 + 1)^{th}$ element to an $(N - x2)^{th}$ element in $[e(n)]$ are $[f(x)]$, where a sum of $x1$ and $x2$ is $N - X$, $x1$ is an integer greater than or equal to 0, and $x2$ is an integer greater than or equal to 0; or when $X$ is equal to $N$, $[e(n)]$ is $[f(x)]$.

Further, the transceiver module 902 is further configured to send or receive first indication information, where the first indication information indicates at least one of $X$ $x1$, and $x2$.

In a possible design solution, the transceiver module 902 is further configured to send or receive second indication information, where the second indication information indicates at least one of $\alpha$, $\beta$, and $\gamma$, and/or a value of each element in $[b(n)]$.

Optionally, the first indication information is carried in DCI, and/or the second indication information is carried in RRC layer signaling or MAC layer signaling.

In a possible design solution, the processing module 901 is specifically configured to generate the first signal by performing inverse Fourier transform on $[c(n)]$.

Optionally, the transceiver module 902 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions.

When the processing module 901 executes the program or the instructions, the communication apparatus 900 is caused to perform a function of the first apparatus in the method shown in FIG. 5 in the foregoing method.

It may be understood that the communication apparatus 900 may be a terminal device or a network device, for example, remote UE or a remote device, or may be a chip (system) or another part or component that can be disposed in the terminal device or the network device, or may be an apparatus including the terminal device or the network device. This is not limited in this application.

In addition, for technical effects of the communication apparatus 900, refer to the technical effects of the communication method shown in FIG. 5. Details are not described herein again.

In some embodiments, the communication apparatus 900 is applicable to the communication system shown in FIG. 3, and performs a function of the second apparatus in the method shown in FIG. 5.

The transceiver module 902 is configured to receive a first signal; and the processing module 901 is configured to demodulate the first signal. The first signal is determined based on $[c(n)]$, $[c(n)]$ is determined based on $[a(n)]$ and $[b(n)]$, $[b(n)]$, $[c(n)]$, and $[c(n)]$ each include $N$ elements, $n \in \{1, ..., N\}$, and $N$ is a positive integer. The elements in $[a(n)]$ satisfy

$$a(n) = e^{-j\frac{2\pi}{N}(\alpha n^2 + \beta n + \gamma)}$$, and $\alpha$, $\beta$, and $\gamma$ are predetermined coefficients. The elements in $[b(n)]$ meet a first feature, a second feature, a third feature, or a fourth feature. The first feature is that when $n$ is less than $k$, $b(n)$ is less than $b(n + 1)$, or when $n$ is greater than $k$, $b(n)$ is less than $b(n - 1)$, the second feature is that when $n$ is less than $k$, $b(n)$ is greater than $b(n + 1)$, or when $n$ is greater than $k$, $b(n)$ is greater than $b(n - 1)$, the third feature is that when $n$ is less than $k1$, $b(n)$ is greater than $b(n + 1)$, when $n$ is greater than or equal to $k1$ and less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than $N$.

In a possible design solution, $[c(n)]$ is obtained by processing $[d(n)]$ based on $[a(n)]$ and $[b(n)]$, $[d(n)]$ includes $N$ elements, and an element in $[c(n)]$ is represented by the following: $c(n) = b(n) * a(n) * d(n)$.

Optionally, $[d(n)]$ is obtained by performing Fourier transform on $[e(n)]$, $[e(n)]$ is determined based on $[f(x)]$, $[f(x)]$ carries information, $[f(x)]$ includes $X$ elements, $x \in \{1, ..., X\}$, and $X$ is less than or equal to $N$. When $X$ is less than $N$, values of first $x1$ elements and values of last $x2$ elements in $[e(n)]$ are 0, and an $(x1 + 1)^{th}$ element

to an (N - $x2$)$^{th}$ element in [$e(n)$] are [$f(x)$], where a sum of $x1$ and $x2$ is $N$ - $X$, $x1$ is an integer greater than or equal to 0, and $x2$ is an integer greater than or equal to 0; or when $X$ is equal to $N$, [$e(n)$] is [$f(x)$].

Further, the transceiver module 902 is further configured to receive or send first indication information, where the first indication information indicates $X$ and at least one of $x1$ and $x2$.

In a possible design solution, the transceiver module 902 is further configured to receive or send second indication information, where the second indication information indicates at least one of $\alpha$, $\beta$, and $\gamma$, and/or a value of each element in [$b(n)$].

Optionally, the first indication information is carried in DCI, and/or the second indication information is carried in RRC layer signaling or MAC layer signaling.

In a possible design solution, the first signal is obtained by performing inverse Fourier transform on [$c(n)$].

Optionally, the transceiver module 902 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 is caused to perform a function of the second apparatus in the method shown in FIG. 5 in the foregoing method.

It may be understood that the communication apparatus 900 may be a terminal device or a network device, for example, remote UE or a remote device, or may be a chip (system) or another part or component that can be disposed in the terminal device or the network device, or may be an apparatus including the terminal device or the network device. This is not limited in this application.

In addition, for technical effects of the communication apparatus 900, refer to the technical effects of the communication method shown in FIG. 5. Details are not described herein again.

FIG. 10 is a diagram 2 of a structure of a communication apparatus according to an embodiment of this application. For example, the communication apparatus may be a terminal, or may be a chip (system) or another part or component that can be disposed in the terminal. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected to the memory 1002 and the transceiver 1003 through a communication bus.

The following describes parts of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing unit, CPU), or may be an application-specific integrated circuit (application-specific integrated circuit, ASIC), or is configured as one or more integrated circuits that implement embodiments of this application, for example, one or more microprocessors (digital signal processor, DSP), or one or more field programmable gate arrays (field programmable gate array, FPGA).

Optionally, the processor 1001 may perform various functions of the communication apparatus 1000 by running or executing a software program stored in the memory 1002 and invoking data stored in the memory 1002, for example, perform the communication method shown in FIG. 5.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store a software program for executing the solutions of this application, and the processor 1001 controls execution of the software program. For specific implementation, refer to the foregoing method embodiment. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, and a Blu-ray disc), magnetic disk storage media, or another magnetic storage device, or any another medium that can be used to carry or store expected program code in the form of instructions or a data structure and that can be accessed by a computer, but not limited thereto. The memory 1002 may be integrated with the processor 1001, or may exist independently and is coupled to the processor 1001 through an interface circuit (not shown in FIG. 10) of the communication apparatus 1000. This is not specifically limited in this embodiment of this application.

The transceiver 1003 is configured to communicate with another communication apparatus. For example, the communication apparatus 1000 is a terminal, and the transceiver 1003 may be configured to communicate with a network apparatus or communicate with another terminal apparatus. For another example, the communication apparatus 1000 is a network apparatus, and the transceiver 1003 may be configured to communicate with a terminal or communicate with another network apparatus.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through an interface circuit (not shown in FIG. 10) of the communication apparatus 1000. This is not specifically limited in this embodiment of this application.

It may be understood that the structure of the communication apparatus 1000 shown in FIG. 10 does not constitute a limitation on the communication apparatus. An actual communication apparatus may include more or fewer parts than those shown in the figure, or some parts may be combined, or different part deployment may be used.

In addition, for technical effects of the communication apparatus 1000, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessed by the computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for causing a computer device (which may be a personal computer, a server, or a network apparatus) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   determining [c(n)] based on [a(n)] and [b(n)], wherein [a(n)], [b(n)], and [c(n)] each comprise N elements, $n \in \{1, \ldots, N\}$, and N is a positive integer; and
   generating a first signal based on [c(n)], and sending the first signal, wherein
   the elements in [a(n)] satisfy
   $$a(n) = e^{-j\frac{2\pi}{N}(\alpha n^2 + \beta n + \gamma)}$$ , and $\alpha$, $\beta$, and $\gamma$ are predetermined coefficients; and the elements in [b(n)] meet a first feature, a second feature, a third feature, or a fourth feature, wherein the first feature is that when n is less than k, b(n) is less than b(n + 1), or when n is greater than k, b(n) is less than b(n - 1), the second feature is that when n is less than k, b(n) is greater than b(n + 1), or when n is greater than k, b(n) is greater than b(n - 1), the third feature is that when n is less than k1, b(n) is greater than b(n + 1), when n is greater than or equal to k1 and

less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than $N$.

2. The method according to claim 1, wherein the determining $[c(n)]$ based on $[a(n)]$ and $[b(n)]$ comprises: processing $[d(n)]$ based on $[a(n)]$ and $[b(n)]$ to obtain $[c(n)]$, wherein $[d(n)]$ comprises $N$ elements, and an element in $[c(n)]$ is represented by the following: $c(n) = b(n) * a(n) * d(n)$.

3. The method according to claim 2, wherein $[d(n)]$ is obtained by performing Fourier transform on $[e(n)]$, $[e(n)]$ is determined based on $[f(x)]$, $[f(x)]$ carries information, $[f(x)]$ comprises $X$ elements, $x \varepsilon \{1, \dots, X\}$, and $X$ is a positive integer less than or equal to $N$; and

> when $X$ is less than $N$, values of first $x1$ elements and values of last $x2$ elements in $[e(n)]$ are 0, and an $(x1 + 1)^{th}$ element to an $(N - x2)^{th}$ element in $[e(n)]$ are $[f(x)]$, wherein a sum of $x1$ and $x2$ is $N - X$, $x1$ is an integer greater than or equal to 0, and $x2$ is an integer greater than or equal to 0; or
> when $X$ is equal to $N$, $[e(n)]$ is $[f(x)]$.

4. The method according to claim 3, wherein the method further comprises:
sending or receiving first indication information, wherein the first indication information indicates $X$ and at least one of $x1$ and $x2$.

5. The method according to any one of claims 1 to 4, wherein the method further comprises:
sending or receiving second indication information, wherein the second indication information indicates at least one of $\alpha$, $\beta$, and $\gamma$, and/or a value of each element in $[b(n)]$.

6. The method according to claim 4 or 5, wherein the first indication information is carried in downlink control information DCI, and/or the second indication information is carried in radio resource control RRC layer signaling or media access control MAC layer signaling.

7. The method according to any one of claims 1 to 6, wherein the generating the first signal based on $[c(n)]$ comprises:

generating the first signal by performing inverse Fourier transform on $[c(n)]$.

8. A communication method, wherein the method comprises:

> receiving a first signal; and
> demodulating the first signal, wherein
> the first signal is determined based on $[c(n)]$, $[c(n)]$ is determined based on $[a(n)]$ and $[b(n)]$, $[a(n)]$, $[b(n)]$, and $[c(n)]$ each comprise $N$ elements, $n \in \{1, \dots, N\}$, and $N$ is a positive integer; the elements in $[a(n)]$ satisfy
> $$a(n) = e^{-j\frac{2\pi}{N}(\alpha n^2 + \beta n + \gamma)}$$ , and $\alpha$, $\beta$, and $\gamma$ are predetermined coefficients; and the elements in $[b(n)]$ meet a first feature, a second feature, a third feature, or a fourth feature, wherein the first feature is that when $n$ is less than $k$, $b(n)$ is less than $b(n + 1)$, or when $n$ is greater than $k$, $b(n)$ is less than $b(n - 1)$, the second feature is that when $n$ is less than $k$, $b(n)$ is greater than $b(n + 1)$, or when $n$ is greater than $k$, $b(n)$ is greater than $b(n - 1)$, the third feature is that when $n$ is less than $k1$, $b(n)$ is greater than $b(n + 1)$, when $n$ is greater than or equal to $k1$ and less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than $N$.

9. The method according to claim 8, wherein $[c(n)]$ is obtained by processing $[d(n)]$ based on $[a(n)]$ and $[b(n)]$, $[d(n)]$ comprises $N$ elements, and an element in $[c(n)]$ is represented by the following: $c(n) = b(n) * a(n) * d(n)$.

10. The method according to claim 9, wherein $[d(n)]$ is obtained by performing Fourier transform on $[e(n)]$, $[e(n)]$ is determined based on $[f(x)]$, $[f(x)]$ carries information, $[f(x)]$ comprises $X$ elements, $x \in \{1, \dots, X\}$, and $X$ is less than or equal to $N$; and

> when $X$ is less than $N$, values of first $x1$ elements and values of last $x2$ elements in $[e(n)]$ are 0, and an $(x1 + 1)^{th}$ element to an $(N - x2)^{th}$ element in $[e(n)]$ are $[f(x)]$, wherein a sum of $x1$ and $x2$ is $N - X$, $x1$ is an integer greater than or equal to 0, and $x2$ is an integer greater than or equal to 0; or
> when $X$ is equal to $N$, $[e(n)]$ is $[f(x)]$.

**11.** The method according to claim 10, wherein the method further comprises:
receiving or sending first indication information, wherein the first indication information indicates $X$ and at least one of $x1$ and $x2$.

**12.** The method according to any one of claims 8 to 11, wherein the method further comprises:
receiving or sending second indication information, wherein the second indication information indicates at least one of $\alpha$, $\beta$, and $\gamma$, and/or a value of each element in $[b(n)]$.

**13.** The method according to claim 11 or 12, wherein the first indication information is carried in downlink control information DCI, and/or the second indication information is carried in radio resource control RRC layer signaling or media access control MAC layer signaling.

**14.** The method according to any one of claims 8 to 13, wherein the first signal is obtained by performing inverse Fourier transform on $[c(n)]$.

**15.** A communication apparatus, wherein the apparatus comprises:

a processing module, configured to: determine $[c(n)]$ based on $[a(n)]$ and $[b(n)]$, wherein $[a(n)]$, $[b(n)]$, and $[c(n)]$ each comprise $N$ elements, $n \in \{1, \ldots, N\}$, and N is a positive integer; and generate a first signal based on $[c(n)]$; and
a transceiver module, configured to send the first signal, wherein
the elements in $[a(n)]$ satisfy

$$a(n) = e^{-j\frac{2\pi}{N}(\alpha n^2 + \beta n + \gamma)}$$

, and $\alpha$, $\beta$, and $\gamma$ are predetermined coefficients; and the elements in $[b(n)]$ meet a first feature, a second feature, a third feature, or a fourth feature, wherein the first feature is that when $n$ is less than $k$, $b(n)$ is less than $b(n + 1)$, or when $n$ is greater than $k$, $b(n)$ is less than $b(n - 1)$, the second feature is that when $n$ is less than $k$, $b(n)$ is greater than $b(n + 1)$, or when $n$ is greater than $k$, $b(n)$ is greater than $b(n - 1)$, the third feature is that when $n$ is less than $k1$, $b(n)$ is greater than $b(n + 1)$, when $n$ is greater than or equal to $k1$ and less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than $N$.

**16.** The apparatus according to claim 15, wherein the processing module is specifically configured to process $[d(n)]$ based on $[a(n)]$ and $[b(n)]$ to obtain $[c(n)]$, $[d(n)]$ comprises $N$ elements, and an element in $[c(n)]$ is represented by the following: $c(n) = b(n) * a(n) * d(n)$.

**17.** The apparatus according to claim 16, wherein $[d(n)]$ is obtained by performing Fourier transform on $[e(n)]$, $[e(n)]$ is determined based on $[f(x)]$, $[f(x)]$ carries information, $[f(x)]$ comprises $X$ elements, $x \in \{1, \ldots, X\}$, and $X$ is a positive integer less than or equal to $N$; and

when $X$ is less than $N$, values of first $x1$ elements and values of last $x2$ elements in $[e(n)]$ are 0, and an $(x1 + 1)^{th}$ element to an $(N - x2)^{th}$ element in $[e(n)]$ are $[f(x)]$, wherein a sum of $x1$ and $x2$ is $N - X$, $x1$ is an integer greater than or equal to 0, and $x2$ is an integer greater than or equal to 0; or when $X$ is equal to $N$, $[e(n)]$ is $[f(x)]$.

**18.** The apparatus according to claim 17, wherein the transceiver module is further configured to send or receive first indication information, and the first indication information indicates $X$ at least one of $x1$ and $x2$.

**19.** The apparatus according to any one of claims 15 to 18, wherein the transceiver module is further configured to send or receive second indication information, and the second indication information indicates at least one of $\alpha$, $\beta$, and $\gamma$, and/or a value of each element in $[b(n)]$.

**20.** The apparatus according to claim 18 or 19, wherein the first indication information is carried in downlink control information DCI, and/or the second indication information is carried in radio resource control RRC layer signaling or media access control MAC layer signaling.

**21.** The apparatus according to any one of claims 15 to 20, wherein the processing module is specifically configured to generate the first signal by performing inverse Fourier transform on $[c(n)]$.

**22.** A communication apparatus, wherein the apparatus comprises:

a transceiver module, configured to receive a first signal; and
a processing module, configured to demodulate the first signal, wherein
the first signal is determined based on $[c(n)]$, $[c(n)]$ is determined based on $[a(n)]$ and $[b(n)]$, $[a$

$(n)$], $[b(n)]$, and $[c(n)]$ each comprise $N$ elements, $n \in \{1, \dots, N\}$, and $N$ is a positive integer; the elements in $[a(n)]$ satisfy

$$a(n) = e^{-j\frac{2\pi}{N}(\alpha n^2 + \beta n + \gamma)}$$, and $\alpha$, $\beta$, and $\gamma$ are predetermined coefficients; and the elements in $[b(n)]$ meet a first feature, a second feature, a third feature, or a fourth feature, wherein the first feature is that when $n$ is less than $k$, $b(n)$ is less than $b(n + 1)$, or when $n$ is greater than $k$, $b(n)$ is less than $b(n - 1)$, the second feature is that when $n$ is less than $k$, $b(n)$ is greater than $b(n + 1)$, or when $n$ is greater than $k$, $b(n)$ is greater than $b(n - 1)$, the third feature is that when $n$ is less than $k1$, $b(n)$ is greater than $b(n + 1)$, when $n$ is greater than or equal to $k1$ and less than $k2$, $b(n)$ is less than $b(n + 1)$, when $n$ is greater than or equal to $k2$ and less than $k3$, $b(n)$ is greater than $b(n + 1)$, or when $n$ is greater than $k3$, $b(n)$ is less than $b(n + 1)$, the fourth feature is that when $n$ is less than $k1$, $b(n)$ is less than $b(n + 1)$, when $n$ is greater than or equal to $k1$ and less than $k2$, $b(n)$ is greater than $b(n + 1)$, when $n$ is greater than or equal to $k2$ and less than $k3$, $b(n)$ is less than $b(n + 1)$, or when $n$ is greater than $k3$, $b(n)$ is greater than $b(n + 1)$, and $k$, $k1$, $k2$, and $k3$ are all positive integers greater than 1 and less than $N$.

23. The apparatus according to claim 22, wherein $[c(n)]$ is obtained by processing $[d(n)]$ based on $[a(n)]$ and $[b(n)]$, $[d(n)]$ comprises $N$ elements, and an element in $[c(n)]$ is represented by the following: $c(n) = b(n) * a(n) * d(n)$.

24. The apparatus according to claim 23, wherein $[d(n)]$ is obtained by performing Fourier transform on $[e(n)]$, $[e(n)]$ is determined based on $[f(x)]$, $[f(x)]$ carries information, $[f(x)]$ comprises $X$ elements, $x \in \{1, \dots, X\}$, and $X$ is less than or equal to $N$; and

   when $X$ is less than $N$, values of first $x1$ elements and values of last $x2$ elements in $[e(n)]$ are 0, and an $(x1 + 1)^{th}$ element to an $(N - x2)^{th}$ element in $[e(n)]$ are $[f(x)]$, wherein a sum of $x1$ and $x2$ is $N - X$, $x1$ is an integer greater than or equal to 0, and $x2$ is an integer greater than or equal to 0; or when $X$ is equal to $N$, $[e(n)]$ is $[f(x)]$.

25. The apparatus according to claim 24, wherein the transceiver module is further configured to receive or send first indication information, and the first indication information indicates $X$ and at least one of $x1$ and $x2$.

26. The apparatus according to any one of claims 22 to 25, wherein the transceiver module is further configured to receive or send second indication information, and the second indication information indicates at least one of $\alpha$, $\beta$, and $\gamma$, and/or a value of each element in $[b(n)]$.

27. The apparatus according to claim 25 or 26, wherein the first indication information is carried in downlink control information DCI, and/or the second indication information is carried in radio resource control RRC layer signaling or media access control MAC layer signaling.

28. The apparatus according to any one of claims 22 to 27, wherein the first signal is obtained by performing inverse Fourier transform on $[c(n)]$.

29. A communication apparatus, wherein the communication apparatus comprises a processor, and when the processor executes computer instructions, the communication apparatus is caused to perform the method according to any one of claims 1 to 7, or perform the method according to any one of claims 8 to 14.

30. A communication chip, wherein the communication chip stores instructions, and when the chip runs on a communication device, the method according to any one of claims 1 to 7 or the method according to any one of claims 8 to 14 is implemented.

31. A communication system, wherein the communication system comprises an apparatus configured to perform the method according to any one of claims 1 to 7, and/or an apparatus configured to perform the method according to any one of claims 8 to 14.

32. A computer-readable storage medium, wherein the computer-readable storage medium comprises a computer program or instructions, and when the computer program or the instructions are run on a computer, the computer is caused to perform the method according to any one of claims 1 to 7, or perform the method according to any one of claims 8 to 14.

33. A computer program product, wherein the computer program product comprises a computer program or instructions, and when the computer program or the instructions are run by a communication apparatus, the method according to any one of claims 1 to 7 or the method according to any one of claims 8 to 14 is performed.

FIG. 1

Base station as transmitter
and receiver

Terminal as transmitter and
receiver

Base station A as transmitter
and base station B as receiver

Terminal A as transmitter
and terminal B as receiver

Base station as transmitter and
terminal as receiver

Terminal as transmitter and base
station as receiver

FIG. 2

| First apparatus | Second apparatus |

FIG. 3

FIG. 4

First
apparatus

Second
apparatus

S501: Determine [c(n)]
based on [a(n)] and [b(n)]

S502: Generate a first signal
based on [c(n)]

S503: First signal

S504: Demodulate the
first signal

FIG. 5

Element-wise
multiplication

Element-wise
multiplication

[f(x)]

DFT

[a(n)]

[b(n)]

IDFT

First
signal

[d(n)]

[c(n)]

FIG. 6

Network
apparatus

Terminal
apparatus

S701: Generate a first signal

S702: Indication information

S703: First signal

S704: Receive an echo signal of
the first signal and perform
sensing based on the echo signal

FIG. 7

Network apparatus

Terminal apparatus

S801: Determine a parameter of an uplink signal

S802: Indication information

S803: Generate a first signal based on the indication information

S804: First signal

S805: Receive an echo signal of the first signal and perform sensing based on the echo signal

S806: Receive a reflected signal of the first signal and perform sensing based on the reflected signal

FIG. 8

Communication apparatus 900

Processing module

901

Transceiver module

902

FIG. 9

FIG. 10

## INTERNATIONAL SEARCH REPORT

| International application No. |
|---|
| **PCT/CN2024/113200** |

| A. | CLASSIFICATION OF SUBJECT MATTER |
|---|---|

H04L27/26(2006.01)i

According to International Patent Classification (IPC) or to both national classification and IPC

| B. | FIELDS SEARCHED |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXTC, VEN, CJFD, CNKI, 3GPP, ISI: 感知, 感测, 频谱, 频率, 成形, 成型, 整形, sensing, OFDM, spectrum, frequency, shaping

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116132242 A (BEIJING INSTITUTE OF TECHNOLOGY et al.) 16 May 2023 (2023-05-16) <br> description, paragraphs 6-50 | 1-33 |
| A | CN 114726410 A (SHANDONG UNIVERSITY) 08 July 2022 (2022-07-08) <br> entire document | 1-33 |
| A | CN 115913862 A (BEIJING INSTITUTE OF TECHNOLOGY et al.) 04 April 2023 (2023-04-04) <br> entire document | 1-33 |
| A | US 10985962 B1 (UNIVERSITY OF SOUTH CAROLINA) 20 April 2021 (2021-04-20) <br> entire document | 1-33 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 November 2024** | **25 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/113200**

| Patent document cited in search report | | | Publication date (day/month/year) | Patent family member(s) | | | Publication date (day/month/year) |
|---|---|---|---|---|---|---|---|
| CN | 116132242 | A | 16 May 2023 | None | | | |
| CN | 114726410 | A | 08 July 2022 | US | 2023327739 | A1 | 12 October 2023 |
| CN | 115913862 | A | 04 April 2023 | None | | | |
| US | 10985962 | B1 | 20 April 2021 | None | | | |

Form PCT/ISA/210 (patent family annex) (July 2022)

**EP 4 761 196 A1**

## REFERENCES CITED IN THE DESCRIPTION

**Patent documents cited in the description**

- CN 202311137309